# EUROPÄISCHE PATENTSCHRIFT

(11) **EP 1 645 346 B1**
(45) Veröffentlichungstag und Bekanntmachung des Hinweises auf die Patenterteilung: **24.02.2010**
(21) Anmeldenummer: 05020761.2
(22) Anmeldetag: 23.09.2005
(51) Int. Cl.: B21K 25/00, B23P 11/00, B23P 19/02

(54) **Anordnung zur kraftschlüssigen Verbindung zweier Bauteile**
Arrangement for the positive connection of two components
Arrangement pour le raccordement solide de deux éléments

(30) Priorität: 06.10.2004 DE 102004048650
(43) Veröffentlichungstag der Anmeldung: 12.04.2006
(73) Patentinhaber: Schaeffler KG, 91074 Herzogenaurach (DE)
(72) Erfinder: Motz, Thomas, 91074 Herzogenaurach (DE); Blasch, Jochen, 91074 Herzogenaurach (DE); Biedenbach, Jürgen, 90439 Nürnberg (DE); Gredy, Horst, 91097 Oberrreichenbach (DE)

(56) Entgegenhaltungen:
- EP-A- 1 052 072
- AT-U1- 6 677
- DE-A1- 3 808 302
- DE-A1- 19 522 503
- US-B1- 6 217 250
- PATENT ABSTRACTS OF JAPAN Bd. 018, Nr. 514 (M-1680), 28. September 1994 (1994-09-28) & JP 06 179126 A (NGK SPARK PLUG CO LTD), 28. Juni 1994 (1994-06-28)
- PATENT ABSTRACTS OF JAPAN Bd. 018, Nr. 289 (M-1614), 2. Juni 1994 (1994-06-02) & JP 06 055374 A (MATSUSHITA ELECTRIC WORKS LTD), 1. März 1994 (1994-03-01)

## Beschreibung

### Gebiet der Erfindung

Die Erfindung betrifft eine Anordnung zur kraftschlüssigen Verbindung zwischen einem ersten rotationssymmetrischen Bauteil mit Übermaß und einem eine Aufnahmebohrung aufweisenden zweiten Bauteil, welche unter Zuhilfenahme von Schmiermittel durch einen Auf- oder Einpressvorgang miteinander verbindbar sind. Eine solche Anordnung ist aus der JP-A-06179126 bekannt.

### Hintergrund der Erfindung

Aus der Praxis ist es bekannt, beispielsweise eine Nabe und eine Welle durch so genanntes Schrumpfen drehfest miteinander zu verbinden, wobei üblicherweise eine Übermaßpassung verwendet wird. Vor der Montage der beiden Bauteile wird eine Temperaturdifferenz zwischen den beiden zu verbindenden Bauteilen realisiert, indem die Nabe erwärmt und die Welle gegebenenfalls abgekühlt wird, wodurch diese ihren Durchmesser verbindungserleichternd verändern. Nach der Montage wird durch Temperaturangleichung von Welle und Nabe bei Umgebungstemperatur der gewünschte Pressverbund fixiert.

Dieses Verbindungsverfahren eignet sich überwiegend nur für Bauteile mit großen Durchmessern, ferner sind nachteilige Anlasseffekte bei vergüteten Bauteilen zu verzeichnen.

Zudem ist es bekannt, die Montage der genannten Bauteile mittels einer Presse durchzuführen. Beim Aufpressen von einer Nabe auf eine Welle mit einem vergleichsweise großen Aufpressweg und vergleichsweise großem Übermaß der Welle zur Sicherstellung der Übertragbarkeit von großen Drehmomenten und Axialkräften kommt es zwangsläufig zu Riefenbildungen beziehungsweise zum sogenannten ,Fressen", sofern nicht tribologische Maßnahmen ergriffen werden, wie beispielsweise der Einsatz von Schmiermitteln, wie Öle, und/oder kostenintensive Hartstoff-Oberflächenbeschichtungen.

Für eine prozesssichere Fertigung eines Pressverbundes, im speziellen die Positioniergenauigkeit der zu verbindenden Bauteile zueinander, ist demnach das Vermeiden des "Fressens" unerlässlich. Wird ein "Fressen" nicht vermieden bzw. keine ausreichende Reproduzierbarkeit des Aufpressvorganges erreicht, so kann auch keine Prozesssicherheit im Hinblick auf die Positioniergenauigkeit in axialer und/oder Umfangsrichtung garantiert werden. Ebenso darf die Drehmomentübertragbarkeit des Pressverbundes nicht durch die Montagehilfe (Schmiermittel) gemindert werden.

Sofern also Schmiermittel zum Einsatz kommen, müssen diese nach dem Verbinden der Bauteile zwischen diesen auswandern können, bzw. es dürfen keine Schmiermittel zur Anwendung kommen, die unter hoher Flächenpressung nachteilige Reaktionsschichten bilden. Demgegenüber bieten jedoch leicht aus einer Pressfuge auswandernde Schmiermittel wiederum nur eine geringe Sicherheit gegen adhäsiv abrasiven Verschleiß.

Aus der DE 38 08 302 A1 ist eine Anordnung zur kraftschlüssigen Befestigung durch Einpressen eines Bolzens mit im Mantel eingearbeiteter Ringnut in eine durch einen herausgeformten, hülsenförmigen Absatz gebildete, gegenüber dem Bolzen mit Untermaß ausgeführte Bohrung eines Blechteils bekannt. Die Mantelfläche des Bolzens ist feinbearbeitet und mindestens die Bohrungsfläche des Blechteils ist mit einer Weichbeschichtung versehen, vorzugsweise verzinkt. Gemäß dieser Druckschrift ist vorgesehen, dass das an der Bohrungsfläche des Blechteils befindliche Zink von dem in die Bohrung eindringenden Bolzen nur soweit abgetragen und aus der Bohrung herausbefördert wird, dass einerseits eine Restoberflächerauhigkeit des Bolzens durch dort verbleibenden Zink geglättet wird und andererseits eine Restmenge Zink in den Unebenheiten der Bohrungsoberfläche verbleibt, so dass auch diese geglättet ist. Bei dem Einpressvorgang dringt zudem Blechmaterial radial in die Ringnut ein und es findet eine Kaltverschweißung zwischen den Materialen des Bolzens, des Blechteils und dem Zink statt.

Aus der JP 06 179 126 A1 ist eine Verbindungsanordnung bekannt, bei der ein erstes rotationssymmetrisches Bauteil mit Übermaß in eine Aufnahmebohrung eines zweiten Bauteils unter Zuhilfenahme eines Schmiermittels einpressbar ist. In dieser Druckschrift ist kein Hinweis darauf zu finden, dass das zweite Bauteil, welches die Bohrung aufweist, derart ausgebildet ist, dass in Auf- bzw. Einpressrichtung gesehen, im Endabschnitt der Anordnung bei einem Verbinden der beiden Bauteile ein lokal begrenzter erhöhter Passfugendruck bzw. Schmiermitteldruck erzeugt wird.

Außerdem ist die AT 006 677 U1 bekannt, welche ein Verfahren zum Verschweißen eines rotationssymmetrischen Teils mit einem Nabenteil zu einem verzugsfreien Endprodukt offenbart. Dazu sind das rotationssymmetrische Teil und das Nabenteil in ihren Längsschnitten so bemessen, dass beim Aufpressen oder Aufschrumpfen des rotationssymmetrischen Teils auf das Nabenteil im Material des rotationssymmetrischen Teils mechanische Spannungen und durch diese Verformungen entstehen, die den beim darauf folgenden Schweißen zu erwartenden Spannungen und durch diese verursachten Verformungen entgegengesetzt sind.

### Aufgabe der Erfindung

Der Erfindung liegt die Aufgabe zugrunde, einen Pressverbund bzw. eine Anordnung zur kraftschlüssigen Verbindung zwischen einem ersten rotationssymmetrischen Bauteil mit Übermaß und einem eine Aufnahmebohrung aufweisenden zweiten Bauteil unter Zuhilfenahme von Schmiermittel durch einen Auf- oder Einpressvorgang zu schaffen, der bei hoher Prozesssicherheit im Hinblick auf die Positioniergenauigkeit der zu verbindenden Bauteile untereinander in axialer und/oder Umfangsrichtung mit einfachsten Maßnahmen sowie kostengünstig zu realisieren ist und Riefenbildungen beziehungsweise ein "Fressen" wirkungsvoll vermeidet.

### Lösung der Aufgabe

Der Erfindung liegt die Erkenntnis zugrunde, dass eine hohe Qualität eines Pressverbundes der gattungsgemäßen Art üblicherweise nur mit einem hohen und somit kostenintensiven Aufwand erzielbar ist.

Gemäß den Merkmalen des Hauptanspruchs wird ausgegangen von einer Anordnung zur kraftschlüssigen Verbindung zwischen einem ersten rotationssymmetrischen Bauteil mit Übermaß und einem eine Aufnahmebohrung aufweisenden zweiten Bauteil, welche unter Zuhilfenahme von Schmiermittel durch einen Auf- oder Einpressvorgang miteinander verbindbar sind. Dabei ist vorgesehen, dass das zweite Bauteil derart ausgebildet ist, dass, in Auf- bzw. Einpressrichtung gesehen, im Endabschnitt der Anordnung bei einem Verbinden der beiden Bauteile ein lokal begrenzter erhöhter Druck in der Passfuge bzw. im Schmiermittel erzeugt wird, wobei der erhöhte Passfugendruck bzw. Schmiermitteldruck durch ein lokal höheres Übermaß und/oder eine lokal höhere Steifigkeit des zweiten Bauteils im besagten Endabschnitt der Anordnung gebildet ist.

Durch diese Maßnahme wird besonders vorteilhaft ein hydrodynamischer Schmierungseffekt sichergestellt, der zum einen mit geringeren aufzubringenden Auf- oder Einpresskräften einhergeht und zum anderen wirkungsvoll eine Riefenbildung beziehungsweise ein "Fressen" verhindert.

Die Unteransprüche beschreiben bevorzugte Weiterbildungen oder Ausgestaltungen der Erfindung.

So ist beispielsweise vorgesehen, dass der erhöhte Passfugendruck bzw. Schmiermitteldruck im Endabschnitt der Anordnung durch eine ein lokal höheres Übermaß bewirkende lokale Einschnürung der Aufnahmebohrung des zweiten Bauteils gebildet ist. Die lokale Einschnürung der Aufnahmebohrung sollte wenigstens in ihrem Einlaufbereich, vorzugsweise sowohl im Einlaufbereich als auch im Auslaufbereich mit einer Verrundung ausgebildet sein, wodurch die Montage günstig unterstützt wird.

Gemäß einer weiteren vorteilhaften Ausgestaltung der Erfindung kann der erhöhte Passfugendruck im genannten Endabschnitt des Pressverbundes auch durch eine im Verhältnis zum vorgelagerten Abschnitt desselben, eine lokal höhere Steifigkeit bewirkend, erhöhte Wandungsstärke des zweiten Bauteils gebildet sein, da hierdurch die elastische Verformung des zweiten Bauteils im Endabschnitt gemindert wird, welches in der Folge zu einer erhöhten Haltekraft zwischen den beiden zu verbindenden Bauteilen führt.

Ferner ist es auch möglich, eine lokale Erhöhung des Passfugendrucks im genannten Endabschnitt dadurch zu erreichen, dass dieser Abschnitt lokal begrenzt gehärtet ausgebildet wird.

Durch die Erfindung mit erfasst ist selbstverständlich auch eine beliebige Kombination der vorstehenden Ausgestaltungsvarianten.

Wie die Erfindung weiter vorsieht, ist der Passfugendruck im Endabschnitt des Pressverbundes derart gewählt, dass eine Dichtlippenwirkung erzielbar ist, die ihrerseits im Sinne der Erfindung die Ausbildung des gewünschten hydrodynamischen Schmierungseffektes besonders vorteilhaft unterstützt.

Im Rahmen von durchgeführten Versuchen waren ferner besonders gute Ergebnisse hinsichtlich der Prozesssicherheit und Vermeidung von Riefen bzw. des "Fressens" zu verzeichnen, wenn der Betrag der lokal begrenzten Erhöhung des Passfugendruckes im Endabschnitt des Pressverbundes in einem Bereich von etwa 25% bis etwa 150% des für den Pressverbund herkömmlich ausgelegten Passfugendruckes eingestellt ist.

Gleichfalls hat sich eine axiale Länge des genannten Endabschnittes mit erhöhtem Passfugendruck in einem gewählten Bereich von etwa 0,5 mm bis etwa 5,0 mm als vorteilhaft erwiesen.

Die erfindungsgemäße Anordnung kann sowohl durch eine Welle/Nabe-Verbindung als auch durch eine Welle/Wellendichtring-Verbindung, eine Welle/Gleithülse-Verbindung, eine Welle/Lagerring-Verbindung, eine Aufnahmebohrung/ Lagerring-Verbindung oder dergleichen gebildet sein.

### Kurze Beschreibung der Zeichnungen

Die Erfindung wird im folgenden anhand der beiliegenden Zeichnungen näher erläutert. Dabei zeigen:
- Figur 1: einen Teilschnitt eines erfindungsgemäß ausgebildeten Press- verbundes,
- Figur 2: die Einzelheit Z gemäß Figur 1, und
- Figur 3: ein Diagramm des Verlaufs und des Streubandes der Auf- bzw. Einpresskraft F über die Überdeckung S ohne und mit hydrody- namischem Schmiereffekt.

### Ausführliche Beschreibung der Zeichnungen

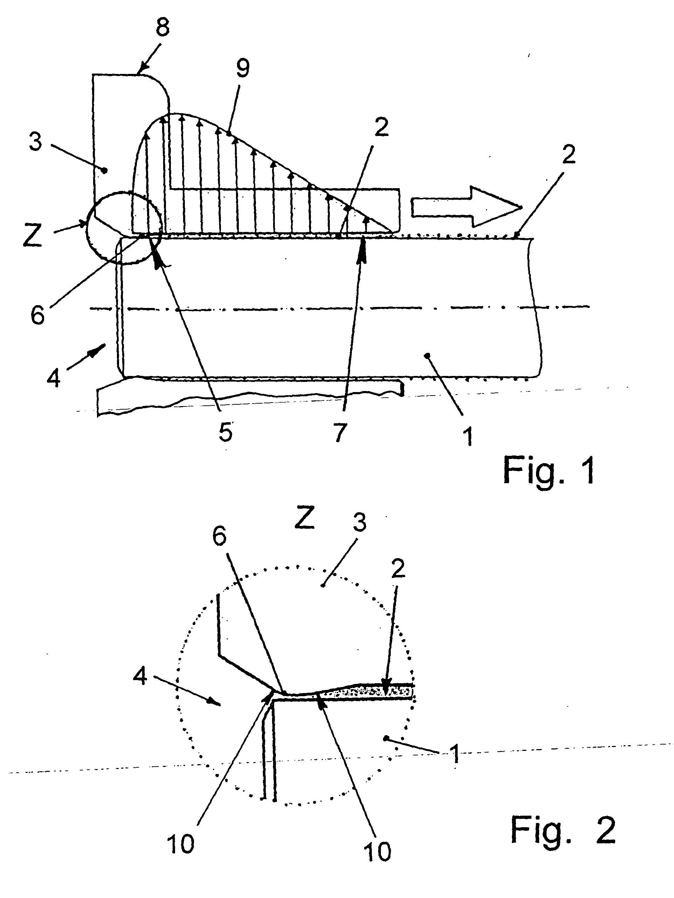

Der in Figur 1 und Figur 2 beispielgebend gezeigte Pressverbund ist durch ein erstes Bauteil 1 in Form einer Welle mit vergleichsweise großem Übermaß gebildet, auf welches mittels einer an sich bekannten und demgemäss nicht näher gezeigten Presseinrichtung, beispielsweise einer Spindelpresse, und unter Zuhilfenahme eines Schmiermittels 2, beispielsweise eines geeigneten Schmieröls, welches den Reibungswiderstand während der Montage mindert, in Pfeilrichtung ein zweites Bauteil 3 in Form einer Nabe aufgepresst wird.

Demgegenüber ist es auch möglich und wird durch die Erfindung selbstverständlich mit erfasst, dass die Welle 1 in entgegengesetzter Richtung in die Aufnahmebohrung 4 der Nabe 3 eingepresst wird (nicht näher dargestellt).

Erfindungsgemäß ist das zweite Bauteil 3 beziehungsweise die Nabe nunmehr derart ausgebildet, dass in Aufpressrichtung (Pfeilrichtung) gesehen, im Endabschnitt 5 des Pressverbundes ein lokal begrenzter erhöhter Passfugendruck erzeugbar ist. Im Wesentlichen ist der erhöhte Passfugendruck dabei durch ein lokal höheres Übermaß und/oder eine lokal höhere Steifigkeit der Nabe 3 im Endabschnitt 5 des Pressverbundes gebildet.

Der erhöhte Passfugendruck im Endabschnitt 5 des Pressverbundes kann zum einen, wie aus Figur 2 besonders gut ersichtlich, durch eine lokale Einschnürung 6 der Aufnahmebohrung 4 der Nabe 3 gebildet sein. Für den Fachmann ist in Kenntnis der Erfindung leicht nachvollziehbar, dass durch diese Maßnahme ein Pressverbund mit einem örtlich erhöhten Übermaß geschaffen wird, welches mit einer örtlich erhöhten Flächenpressung, konkret einer erhöhten Flächenpressung im Endabschnitt 5 des Pressverbundes einhergeht.

Zum anderen kann der erhöhte Passfugendruck im genannten Endabschnitt 5 auch durch eine lokale Erhöhung der Steifigkeit im Verhältnis zum vorgelagerten Abschnitt 7 des Pressverbundes mittels einer erhöhten Wandungsstärke 8 der Nabe 3 gebildet sein (Figur 1).

Schließlich kann es auch angezeigt sein, die Nabe 3 zur Erhöhung des Passfugendruckes im Endabschnitt 5 lokal begrenzt gehärtet auszubilden, wozu sich insbesondere Randschichthärteverfahren, wie beispielsweise Laseroberflächenhärteverfahren oder Induktionshärteverfahren besonders anbieten.

Gemäß der in Figur 1 dargestellten bevorzugten Ausführungsform weist die Nabe 3 im Endabschnitt 5 des Pressverbundes sowohl eine Einschnürung 6 der Aufnahmebohrung 4 als auch eine erhöhte Wandungsstärke 8 auf, woraus die markante Druckverteilung 9 des Passfugendrucks resultiert. So steigt der Passfugendruck, ausgehend von der Position der Einschnürung 6 im Endabschnitt 5 zunächst stark an und fällt nachfolgend zum vorgelagerten Abschnitt 7 gleichförmig ab.

Durch die vorstehend beschriebene Sondergeometrie der Nabe 3 ist sozusagen eine Dichtlippen- bzw. Dichtkantenwirkung entgegen der Pressrichtung zu verzeichnen, die ihrerseits während des Aufpress- bzw. Einpressvorgangs im vorgelagerten Abschnitt 7 des Pressverbundes vorteilhaft eine hydrodynamische Schmierung mit ausschließlich hydrodynamischer Reibung sichergestellt, indem das Schmiermittel 2 innerhalb der Passfuge unter hohen Druck gesetzt wird und demgemäss den Aufpress- bzw. Einpressvorgang erleichtert. Lediglich in dem in axialer Richtung gesehen relativ kurz bemessenen Endabschnitt 5 mit erhöhtem Passfugendruck ist eine Mischreibung zu verzeichnen.

Aufgrund der Tatsache, dass der Pressverbund nur einseitig abgedichtet ist, kann das Schmiermittel 2 im Laufe der Zeit aus der Passfuge auswandern und so die langfristige Absenkung des Reibmomentes vermieden werden.

Was die Einschnürung 6 der Aufnahmebohrung 4 der Nabe 3 anbelangt, hat es sich zur Erleichterung der Montage der beiden zu verbindenden Bauteile 1, 3 als vorteilhaft erwiesen, dieselbe wenigstens in ihrem Einlaufbereich, vorzugsweise sowohl im Einlaufbereich als auch im Auslaufbereich, mit einer Verrundung 10 zu versehen.

Durch diese Maßnahme wird zum einen die Montage an sich erleichtert, zum anderen wird auch der Bereich mit besonders hoher Flächenpressung auf das notwendige Mindestmaß beschränkt.

Als Ergebnis von durchgeführten Versuchen hat sich ferner ein Bereich mit erfindungsgemäß erhöhtem Passfugendruck von etwa 0,5 mm bis etwa 5,0 mm als im Sinne der Erfindung ausreichend und wirkungsvoll erwiesen.

Des Weiteren wurde gefunden, dass besonders gute Ergebnisse hinsichtlich der Prozesssicherheit und Vermeidung von Riefen bzw. des ,Fressens" zu verzeichnen sind, wenn der Betrag der lokal begrenzten Erhöhung des Passfugendruckes im Endabschnitt 5 des Pressverbundes in einem Bereich von etwa 25% bis etwa 150% des für den Pressverbund herkömmlich ausgelegten Passfugendruckes eingestellt ist. Der Passfugendruck war demnach im Endabschnitt etwa 1,25 bis etwa 2,5 mal höher eingestellt, als ein herkömmlicher Passfugendruck, wobei derselbe in Versuchsdurchführungen beispielsweise schon mit einer Einschnürung 6 von 10 µm bis 30 µm erzielbar war.

Vorstehendes bevorzugtes Ausführungsbeispiel stellt auf eine Kombination einer Einschnürung 6 der Aufnahmebohrung 4 mit einer erhöhten Wandungsstärke 8 ab. Selbstverständlich kann es auch angezeigt sein, beispielsweise in Abhängigkeit von der Bauteilepaarung eines Pressverbundes, Merkmalskombinationen zu wählen, die einen gehärteten Endabschnitt 5 des zweiten Bauteils 3 mit einschließen, oder eine Einschnürung 6 der Aufnahmebohrung 4, eine erhöhte Wandungsstärke 8 oder einen gehärteten Endabschnitt 5 in Alleinstellung vorzusehen.

So kann der Pressverbund, wie vorstehend näher beschrieben, beispielsweise durch eine Welle-Nabe-Verbindung aber auch durch eine Welle-Dichtring-Verbindung, Welle-Gleithülse-Verbindung, Welle-Lagerring-Verbindung, Aufnahmebohrung-Lagerring-Verbindung oder jegliche andere geeignete Verbindung zwischen einem ersten rotationssymmetrischen Bauteil 1 mit großem Übermaß und einem zweiten, eine Aufnahmebohrung 4 aufweisenden Bauteil 3 gebildet sein.

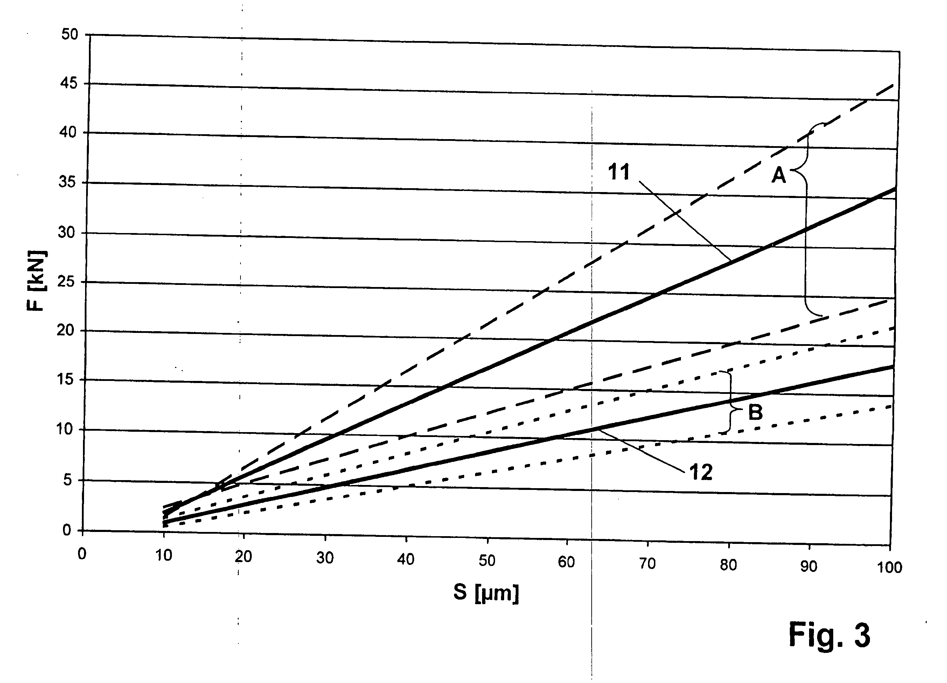

Figur 3 zeigt besonders eindrucksvoll den erzielbaren Vorteil durch die vorbeschriebene Sondergeometrie der Nabe 3 anhand eines Diagramms von Verläufen 11 bzw. und zugehörigen Streubändern A bzw. B der Auf- bzw. Einpresskraft F über die Überdeckung S. Die durchgezogene Funktionslinie 11 kennzeichnet den Verlauf für einen herkömmlichen Pressverbund ohne hydrodynamischen Schmiereffekt, wobei das zugehörige Streuband A durch gestrichelt dargestellte Linien begrenzt ist.

Die durchgezogene Funktionslinie 12 zeigt dagegen den genannten Verlauf für einen erfindungsgemäß ausgebildeten Pressverbund mit hydrodynamischem Schmiereffekt. Erkennbar sind hinsichtlich des erfindungsgemäß ausgebildeten Pressverbundes die zur Erreichung einer bestimmten Überdeckung S der beiden Bauteile 1, 3 geringeren Auf- bzw. Einpresskräfte F und das schmalere Streuband B (gepunktete Linien) für die Auf- bzw. Einpresskräfte F, und somit eine bessere Positioniergenauigkeit der beiden Bauteile 1, 3 zueinander.

Im Hinblick auf eine hohe Prozesssicherheit und Reproduzierbarkeit des Auf- bzw. Einpressvorgangs bei einer Serienfertigung ist eine laufende Überwachung und Beurteilung der Qualität eines erzeugten Pressverbundes unabdingbar. Hierzu sind bisher Kraft-Weg-Überwachungsvorrichtungen im Einsatz, wobei über die Überwachung des Kraftniveaus eine Mindestüberdeckung der Bauteile 1 und 3 sichergestellt werden soll.

Bei diesem Überwachungsverfahren wird vorausgesetzt, dass vorgegebene Toleranzen betreffend die Auf- bzw. Einpressgeschwindigkeit V der Presseinrichtung eingehalten werden. Sind derartige Toleranzen objektiv nicht einzuhalten, beispielsweise infolge eines Wechsels einer Presseinrichtung, infolge Druckschwankungen des die Presseinrichtung betreibenden Hydrauliksystems oder andere Umstände, so tritt ein Versatz des Auf- bzw. Einpresskraftverlaufes auf, und eine herkömmliche Auswertung erfasster Kennwerte der auf den Pressverbund ausgeübten Kraft F in Abhängigkeit der Überdeckung S führt zu einer falschen Qualitätsbeurteilung des Pressverbundes.

Um einer etwaigen falschen Qualitätsbeurteilung wirkungsvoll zu begegnen, wird in Verbesserung herkömmlicher Kraft-Weg-Überwachungsverfahren nunmehr nicht nur während des Auf- oder Einpressvorganges laufend die auf den Pressverbund ausgeübte Kraft F sowie in Abhängigkeit davon die erzielte Überdeckung S der beiden zu verbindenden Bauteile 1 und 3 erfasst, sondern zusätzlich dazu noch die Geschwindigkeit V des Auf- oder Einpressvorganges ermittelt und ausgewertet.

Sowohl die erfassten als auch die ermittelten Werte werden dann innerhalb einer nicht näher gezeigten an sich bekannten elektronischen Auswerteeinrichtung softwaremäßig mit Vorgabewerten verglichen und schließlich kann unter Berücksichtigung von bestimmten Toleranzen auf die Qualität des erzeugten Pressverbundes geschlossen werden.

Die auf den Pressverbund ausgeübte Kraft F und die erzielte Überdeckung S werden vorzugsweise sensorisch mittels an sich bekannter Kraft- bzw. Wegsensoren erfasst, die ihrerseits beispielsweise am Pressenstempel der Presseinrichtung angeordnet sind (nicht näher dargestellt).

Die Geschwindigkeit V des Auf- oder Einpressvorganges kann der Einfachheit halber aus den sensorisch erfassten Wegdaten je Zeiteinheit mittels der verwendeten Software ermittelt werden. Zusätzliche Sensoren sind demgemäss entbehrlich.

### Liste der Bezugszeichen

- 1: Erstes Bauteil (Welle)
- 2: Schmiermittel
- 3: Zweites Bauteil (Nabe)
- 4: Aufnahmebohrung
- 5: Endabschnitt (Pressverbund)
- 6: Einschnürung
- 7: Vorgelagerter Abschnitt
- 8: Erhöhte Wandungsstärke
- 9: Druckverteilung
- 10: Verrundung
- 11: Funktionslinie (ohne hydrodynamischen Schmiereffekt)
- 12: Funktionslinie (mit hydrodynamischem Schmiereffekt)
- A: Streuband
- B: Streuband
- F: Auf- bzw. Einpresskraft
- S: Überdeckung
- V: Auf- bzw. Einpressgeschwindigkeit

## Patentansprüche

1. Anordnung zur kraftschlüssigen Verbindung zwischen einem ersten rotationssymmatrischen Bauteil (1) mit Übermaß und einem eine Aufnahmebohrung (4) aufweisenden zweiten Bauteil (3), welche unter Zuhilfenahme von Schmiermittel (2) durch einen Auf- oder Einpressvorgang miteinander verbindbar sind, **dadurch gekennzeichnet, dass** das zweite Bauteil (3) derart ausgebildet ist, dass, in Auf- bzw. Einpressrichtung gesehen, im Endabschnitt (5) der Anordnung bei einem Verbinden der beiden Bauteile (1, 3) ein lokal begrenzter erhöhter Druck in der Passfuge bzw. im Schmiermittel (2) erzeugt wird, wobei der erhöhte Passfugendruck bzw. Schmiermitteldruck durch ein lokal höheres Übermaß und/oder eine lokal höhere Steifigkeit des zweiten Bauteils (3) im besagten Endabschnitt (5) der Anordnung gebildet ist.

2. Anordnung nach Anspruch 1, **dadurch gekennzeichnet, dass** der erhöhte Passfugendruck bzw. Schmiermitteldruck im Endabschnitt (5) der Anordnung durch eine ein lokal höheres Übermaß bewirkende lokale Einschnürung (6) der Aufnahmebohrung (4) des zweiten Bauteils (3) gebildet ist.

3. Anordnung nach Anspruch 2, **dadurch gekennzeichnet, dass** die lokale Einschnürung (6) der Aufnahmebohrung (4) in ihrem Einlaufbereich oder sowohl im Einlaufbereich als auch im Auslaufbereich mit einer Verrundung (10) ausgebildet ist.

4. Anordnung nach einem der vorherigen Ansprüche, **dadurch gekennzeichnet, dass** der erhöhte Passfugendruck bzw. Schmiermitteldruck im Endabschnitt (5) der Anordnung durch eine im Verhältnis zum vorgelagerten Abschnitt (7) desselben, eine lokal höhere Steifigkeit bewirkend, erhöhte Wandungsstärke (8) des zweiten Bauteils (3) gebildet ist.

5. Anordnung nach einem der vorherigen Ansprüche, **dadurch gekennzeichnet, dass** das zweite Bauteil (3) zur Erhöhung des Passfugendruckes bzw. Schmiermitteldruckes beziehungsweise zur Erzielung einer lokal höheren Steifigkeit im besagten Endabschnitt (5) lokal begrenzt gehärtet ausgebildet ist.

6. Anordnung nach einem der vorherigen Ansprüche, **dadurch gekennzeichnet, dass** der Passfugendruck bzw. Schmiermitteldruck im Endabschnitt (5) der Verbindungsanordnung derart gewählt ist, dass eine Dichtlippenwirkung erzielbar ist.

7. Anordnung nach wenigstens einem der vorherigen Ansprüche, **dadurch gekennzeichnet, dass** der Betrag der lokal begrenzten Erhöhung des Passfugendrucks bzw. Schmiermitteldrucks im Endabschnitt (5) der Verbindungsanordnung in einem Bereich von etwa 25% bis etwa 150% des für die Anordnung herkömmlich ausgelegten Passfugendruckes bzw. Schmiermitteldruckes eingestellt ist.

8. Anordnung nach einem der vorherigen Ansprüche, **dadurch gekennzeichnet, dass** die axiale Länge des Endabschnittes (5) mit erhöhtem Passfugendruck bzw. erhöhtem Schmiermitteldruck in einem Bereich von etwa 0,5 mm bis etwa 5,0 mm gewählt ist.

9. Anordnung nach einem der vorherigen Ansprüche, **dadurch gekennzeichnet, dass** diese durch eine Welle-Nabe-Verbindung, eine Welle-Wellendichtring-Verbindung, eine Welle-Gleithülse-Verbindung, eine Welle-Lagerring-Verbindung oder eine Aufnahmebohrung-Lagerring-Verbindung gebildet ist.

## Claims

1. Arrangement for a force-locked connection between a first rotationally symmetrical, oversized component (1) and a second component (3) comprising a reception bore (4), which first and second components (1 and 3) can be connected to each by a pressing-on or pressing-in procedure with the help of a lubricant (2), **characterised in that** the second component (3) is configured in such a way, that as viewed in pressing-on or pressing-in direction, a locally restricted, augmented pressure is produced during the connection of the two components (1, 3) in the fitting gap or in the lubricant (2) in the end section (5) of the arrangement, said augmented fitting gap pressure or lubricant pressure being caused by a locally greater oversize and/or a locally higher stiffness of the second component (3) in said end section (5) of the arrangement.

2. Arrangement according to claim 1, **characterised in that** the augmented fitting gap pressure or lubricant pressure in the end section (5) of the arrangement is produced through a locally greater oversize formed due to a local constriction (6) of the reception bore (4) of the second component (3).

3. Arrangement according to claim 2, **characterised in that** the local constriction (6) of the reception bore (4) in its run-in region, or both in the run-in and the run-out region, is configured with a rounded portion (10).

4. Arrangement according to one of the preceding claims, **characterised in that** the augmented fitting gap pressure or lubricant pressure in the end section (5) of the arrangement is produced by the fact that a wall thickness (8) of the second component (3) leading to a local increase of stiffness is larger than a wall thickness of a section (7) that is fore-positioned relative to the end section (5).

5. Arrangement according to one of the preceding claims, **characterised in that,** for augmenting the fitting gap pressure or lubricant pressure, or for creating a locally higher stiffness in the end section (5), the second component (3) is hardened in a locally limited region.

6. Arrangement according to one of the preceding claims, **characterised in that** the fitting gap pressure or lubricant pressure in the end section (5) of the connection arrangement is chosen such that a sealing lip effect can be achieved.

7. Arrangement according to one of the preceding claims, **characterised in that** the amount of the local augmentation of the fitting gap pressure or lubricant pressure in the end section (5) of the connection arrangement is set within a range of approximately 25% to approximately 150% of the conventionally used fitting gap pressure or lubricant pressure for such an arrangement.

8. Arrangement according to one of the preceding claims, **characterised in that** the axial length of the end section (5) having the augmented fitting gap pressure or augmented lubricant pressure is chosen from a range of approximately 0.5 mm to approximately 5.0 mm.

9. Arrangement according to one of the preceding claims, **characterised in that** the arrangement is constituted by a shaft and hub connection, a shaft and shaft sealing ring connection, a shaft and sliding sleeve connection, a shaft and bearing ring connection or a reception bore and bearing ring connection.

## Revendications

1. Agencement pour une liaison à force entre un premier composant (1) surdimensionné, à symétrie de révolution et un second composant (3) qui comprend un alésage (4) de réception, lesdits composants (1 et 3) pouvant être reliés, l'un à l'autre, par pressage, de l'un sur l'autre, ou par pressage, de l'un dans l'autre, à l'aide d'un lubrifiant (2) **caractérisé en ce que** le second composant (3) est configuré de telle façon que, en regardant en direction de pressage, lors du reliage des deux composants (1, 3), une pression locale élevée se forme dans la section terminale (5) de l'agencement dans l'intervalle d'ajustage ou dans le lubrifiant (2), cette pression élevée dans l'intervalle d'ajustage ou dans le lubrifiant (2) étant produite par un surdimensionnement local augmenté et/ou par une rigidité locale élevée du second composant (3) au niveau de ladite section terminale (5) de l'agencement.

2. Agencement selon la revendication 1, **caractérisé en ce que** la pression élevée dans l'intervalle d'ajustage ou dans le lubrifiant au niveau de la section terminale (5) de l'agencement est produite par un surdimensionnement local qui se forme du fait d'un rétrécissement (6) local de l'alésage (4) de réception.

3. Agencement selon la revendication 2, **caractérisé en ce que**, dans sa région d'entrée ou, tant dans sa région d'entrée que dans sa région de sortie, le rétrécissement (6) local de l'alésage (4) de réception est configuré avec un arrondissement (10).

4. Agencement selon l'une des revendications précédentes, **caractérisé en ce que** la pression élevée dans l'intervalle d'ajustage ou dans le lubrifiant au niveau de la section terminale (5) de l'agencement est produite par une épaisseur (8) de paroi du second composant (3) laquelle est supérieure à l'épaisseur d'une section (7) qui est située devant celle-ci et qui mène à une rigidité locale élevée.

5. Agencement selon l'une des revendications précédentes, **caractérisé en ce que**, pour l'augmentation de la pression dans l'intervalle d'ajustage ou dans le lubrifiant, ou pour atteindre une rigidité locale élevée au niveau de ladite section terminale (5), le second composant (3) est soumis à un traitement de durcissement local.

6. Agencement selon l'une des revendications précédentes, **caractérisé en ce que** la pression dans l'intervalle d'ajustage ou dans le lubrifiant au niveau de la section terminale (5) de l'agencement de reliage est choisie de telle façon qu'un effet de lèvres d'étanchéité peut être atteint.

7. Agencement selon l'une des revendications précédentes, **caractérisé en ce que** la cote de l'augmentation locale de la pression dans l'intervalle d'ajustage ou dans le lubrifiant au niveau de la section terminale (5) de l'agencement de reliage est ajustée à une valeur approximativement entre 25% et 150% de la pression conventionnellement choisie pour l'intervalle d'ajustage ou pour le lubrifiant dans un tel agencement.

8. Agencement selon l'une des revendications précédentes, **caractérisé en ce que** la langueur axiale de la région terminale (5) ayant une pression élevée dans l'intervalle d'ajustage ou dans le lubrifiant est choisie dans une gamme s'étendant approximativement de 0,5 mm à 5,0 mm.

9. Agencement selon l'une des revendications précédentes, **caractérisé en ce que** cet agencement est constitué d'une liaison arbre-moyeu, d'une liaison arbre-bague d'étanchéité d'arbre, d'une liaison arbre-manchon coulissant, d'une liaison arbre-anneau de roulement, ou d'une liaison alésage de réception-anneau de roulement.
